(19) Europäisches Patentamt
European Patent Office
Office européen des brevets

(11) **EP 4 738 234 A1**

(12) **EUROPEAN PATENT APPLICATION**
published in accordance with Art. 153(4) EPC

(43) Date of publication:
**06.05.2026  Bulletin 2026/19**

(21) Application number: **24831763.8**

(22) Date of filing: **18.06.2024**

(51) International Patent Classification (IPC):
**G06Q 50/26** (2024.01)      **G06Q 50/06** (2024.01)

(52) Cooperative Patent Classification (CPC):
**G06Q 50/06; G06Q 50/26**

(86) International application number:
**PCT/JP2024/022015**

(87) International publication number:
**WO 2025/004901 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023  JP 2023106802**

(71) Applicant: ENEOS CORPORATION
Chiyoda-ku
Tokyo 100-8162 (JP)

(72) Inventors:
• **MINODA, Ai**
  **Tokyo 100-8162 (JP)**

• **INOUE, Jun**
  **Tokyo 100-8162 (JP)**
• **NEGISHI, Yoshinori**
  **Tokyo 100-8162 (JP)**
• **MAEDA, Seiji**
  **Tokyo 100-8162 (JP)**
• **MACHII, Kenji**
  **Tokyo 100-8162 (JP)**
• **SEIKE, Tadashi**
  **Tokyo 100-8162 (JP)**

(74) Representative: **Müller-Boré & Partner**
Patentanwälte PartG mbB
Friedenheimer Brücke 21
80639 München (DE)

(54) **CO2EQ EMISSION EVALUATION DEVICE, CO2EQ EMISSION EVALUATION SYSTEM, AND CO2EQ EMISSION EVALUATION METHOD**

(57)    To evaluate $CO_2$ emissions at the time hydrogen is traded. The present disclosures relates to a $CO_2$eq emission evaluation device that communicates with a factory system and a certification system related to hydrogen production via a network, and the $CO_2$eq emission evaluation device includes: a communication section configured to receive, from the factory system, $CO_2$ emissions generated during production of hydrogen and hydrogen identification information about the produced hydrogen; and a certification information acquirer configured to request the certification system to certify the $CO_2$ emissions associated with the hydrogen identification information and acquire certification information about the $CO_2$ emissions associated with the hydrogen identification information.

FIG.1

EP 4 738 234 A1

**Description**

TECHNICAL FIELD

The present disclosure relates to a $CO_2$eq emission evaluation device, a $CO_2$eq emission evaluation system, and a $CO_2$eq emission evaluation method.

BACKGROUND ART

Hydrogen, which emits no $CO_2$ when combusted, is expected to be an energy that contributes to suppression of global warming. Although hydrogens can be produced from various resources, a small amount of $CO_2$ may be emitted during the production process or when hydrogen is extracted from a hydrogen carrier.
Technologies devised for external charging using renewable energy are known (for example, see Patent Document 1). Patent Document 1 discloses a server configured to issue, upon $CO_2$-free charging of a vehicle, a coupon usable at a store located near the power supply facility to the user of the vehicle.

RELATED ART DOCUMENTS

PATENT DOCUMENT

Patent Document 1: Japanese Unexamined Patent Application Publication No. 2020-102024

SUMMARY OF THE INVENTION

PROBLEMS TO BE SOLVED BY THE INVENTION

However, there has been a problem that an amount of $CO_2$eq emitted is not evaluated at the time hydrogen is traded.
In view of the above problem, the present disclosure provides a technology capable of evaluating $CO_2$eq emissions at the time hydrogen is traded.

MEANS FOR SOLVING THE PROBLEM

The present disclosure provides a $CO_2$eq emission evaluation device that communicates with a factory system and a certification system related to hydrogen production via a network. The $CO_2$eq emission evaluation device includes a communication section configured to receive, from the factory system, $CO_2$ emissions generated during production of hydrogen and hydrogen identification information about the produced hydrogen; and a certification information acquirer configured to request the certification system to certify the $CO_2$ emissions associated with the hydrogen identification information and acquire certification information about the $CO_2$ emissions associated with the hydrogen identification information.

EFFECTS OF THE INVENTION

The present disclosure can provide a technology for evaluating $CO_2$eq emissions at the time hydrogen is traded.

BRIEF DESCRIPTION OF THE DRAWINGS

[FIG. 1] FIG. 1 is a schematic diagram illustrating a flow of production of a hydrogen carrier and extraction of hydrogen from the hydrogen carrier.
[FIG. 2] FIG. 2 is a diagram illustrating a system configuration example of a $CO_2$ emission evaluation system.
[FIG. 3] FIG. 3 is a diagram illustrating hardware configuration examples of a $CO_2$ emission evaluation device, a certification system, and a factory system.
[FIG. 4] FIG. 4 is a diagram illustrating a functional configuration example of a $CO_2$ emission evaluation system.
[FIG. 5] FIG. 5 is a diagram explaining a certification method using an electronic signature.
[FIG. 6] FIG. 6 is a diagram explaining phases of certification for a hydrogen source, a hydrogen carrier, and extraction of hydrogen.

[FIG. 7] FIG. 7 is a diagram explaining a case where hydrogen extracted from a hydrogen carrier is blended with hydrogen produced from other raw materials.

[FIG. 8] FIG. 8 is an exemplary flowchart illustrating a flow in which a simulator estimates an amount of hydrogen extracted.

[FIG. 9] FIG. 9 is an exemplary flowchart illustrating an overall flow of processing performed by a certification system, a $CO_2$ emission evaluation device, and a factory system.

[FIG. 10] FIG. 10 is an exemplary flowchart illustrating a flow of carbon intensity calculation and certification in the case where there is one hydrogen source.

[FIG. 11] FIG. 11 is an exemplary flowchart illustrating a flow of carbon intensity calculation and certification in the case where there are two hydrogen sources.

[FIG. 12] FIG. 12 is an exemplary flowchart illustrating a flow of carbon intensity calculation and certification in the case where there are two hydrogen carriers.

[FIG. 13] FIG. 13 is an exemplary flowchart illustrating a flow of carbon intensity calculation and certification in the case where hydrogen is extracted from a hydrogen carrier and hydrogen is produced by an existing process.

[FIG. 14A] FIG. 14A is a diagram explaining a case where production of hydrogen extracted from methylcyclohexane (MCH) is increased in addition to hydrogen produced from conventional raw materials.

[FIG. 14B] FIG. 14B is a diagram explaining a case where a production rate of hydrogen produced from conventional raw materials is reduced to make room for hydrogen extracted from MCH.

DESCRIPTION OF EMBODIMENTS

Hereinafter, as an example of the embodiment of the present invention, a $CO_2$ emission evaluation system and a $CO_2$ emission evaluation method performed by the $CO_2$ emission evaluation system will be described with reference to the drawings.

<Outline of $CO_2$ Emission Evaluation System>

Hydrogen emits $CO_2$ corresponding to each process of production of renewable energy, production of a low-carbon hydrogen, production of hydrogen using renewable energy, production of a hydrogen carrier, and extraction of hydrogen from a hydrogen carrier. Since each process is carried out at different sites, it has been difficult for a trading partner or the like who finally purchases hydrogen to know how much $CO_2$ was emitted in total to produce the purchased hydrogen and conduct fair trade reflecting value corresponding to $CO_2$ emission. Therefore, in the present disclosure, certification is carried out in each phase of production of hydrogen and other processes, and certification information is provided together with the hydrogen.

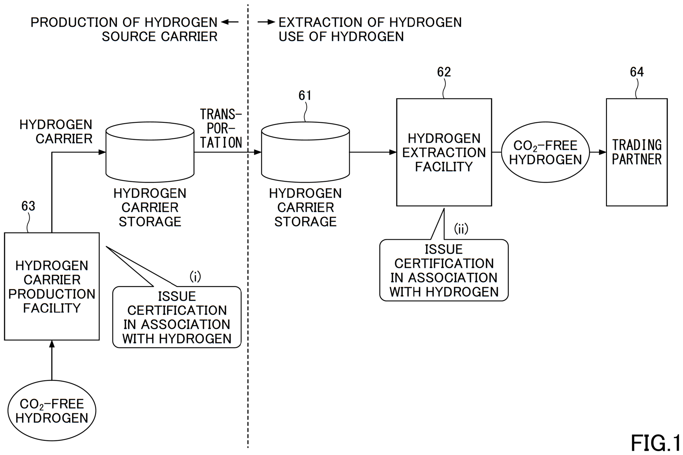

FIG. 1 is a schematic diagram explaining the flow of production of a hydrogen carrier and extraction of hydrogen from a hydrogen carrier. A hydrogen carrier is a medium and a method for efficiently storing and transporting hydrogen, which has low efficiency of storage and transportation as a gas. Examples of hydrogen carriers include methylcyclohexane (MCH) and liquid hydrogen. Hydrogen extraction means extracting hydrogen from a hydrogen carrier (dehydrogenation).

In FIG. 1, $CO_2$-free hydrogen is produced, and a hydrogen carrier containing this $CO_2$-free hydrogen is produced in a production facility 63. The hydrogen produced in the production facility 63 is transported to a storage facility 61. The hydrogen extraction facility 62 extracts hydrogen from the hydrogen carrier in the storage facility 61. The extracted hydrogen is supplied to a trading partner 64. The trading partner 64 may be a hydrogen station, a household, a power plant, or a factory.

The trading partner 64 may want to trade based on a value that reflects the actual amount of $CO_2$ emissions generated during the production of the hydrogen to be purchased. $CO_2$ is emitted mainly during production of renewable energy, hydrogen production, transportation, and hydrogen extraction. The $CO_2$ emission evaluation system of the present embodiment calculates $CO_2$ emissions generated during, for example, hydrogen production and hydrogen extraction, and calculates a carbon intensity based on the calculated $CO_2$ emissions. The $CO_2$ emission evaluation system certifies the carbon intensity, the hydrogen, and the processes (such as hydrogen production and hydrogen extraction) in association with one another as described below. The carbon intensity is an index indicating an amount of carbon emitted per unit during the production of a given product; a lower value represents lower $CO_2$ emissions. The carbon intensity represents $CO_2$ emissions relative to a benchmark (for example, conventional $CO_2$ emissions).

(i) The $CO_2$ emission evaluation system certifies a carbon intensity in association with hydrogen during hydrogen production.
(ii) The $CO_2$ emission evaluation system certifies a carbon intensity in association with hydrogen during hydrogen extraction.

Since hydrogen to be traded is associated with a carbon intensity and has already been certified, it is possible to conduct fair trade based on the value the reflects the carbon intensity, even in the case where hydrogen to be traded was produced overseas or in remote areas. Furthermore, this ensures transparency and traceability in hydrogen trading.

<Terminology>

"Certification" means to certify that a document (electronic data in the present embodiment) has been established and entered in due process. The certification method may be a method agreed upon among multiple countries or certification conducted by a third-party organization. In the present embodiment, certification means to certify that $CO_2$ emissions generated during hydrogen production is correct. "Certification information" is information to certify that certification has been conducted.

"Hydrogen identification information" refers to information to identify hydrogen that is produced, etc. Although hydrogen is amorphous, it can be identified by unique information, such as a production site, a period, and a produced amount. If the production site is the same, the hydrogen identification information may be a lot number associated with a period and a produced amount.

"$CO_2$eq" stands for a $CO_2$ equivalent and refers to a gas that has a greenhouse effect equivalent to $CO_2$. It is possible to convert emissions of other gases into a $CO_2$ equivalent using a global warming potential (GWP). Although the evaluation of $CO_2$ emissions will be described in the present embodiment, emissions of other gases can be calculated in the same way, and it is possible to evaluate $CO_2$eq emissions. The $CO_2$ emission evaluation device 10 is an example of the $CO_2$eq emission evaluation device.

<System Configuration Example>

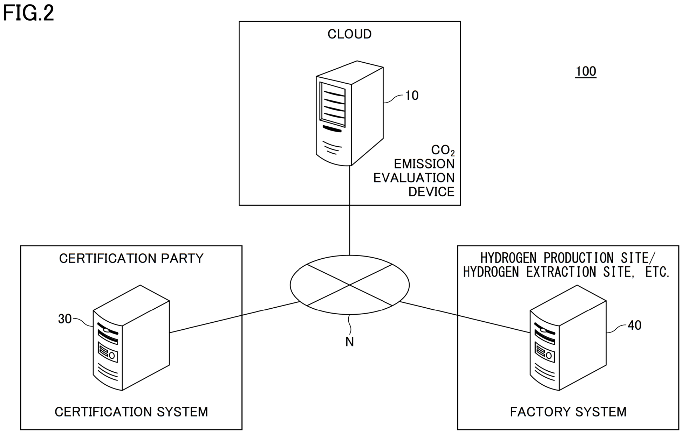

FIG. 2 is a diagram illustrating a system configuration example of a $CO_2$ emission evaluation system 100. In the $CO_2$ emission evaluation system 100, a $CO_2$ emission evaluation device 10, a certification system 30, and a factory system 40 are communicatively connected via a network N. The network N may be a wide-area network such as the Internet, or a dedicated network such as a virtual private network (VPN). The $CO_2$ emission evaluation device 10 only needs to be able to communicate with the certification system 30 and the factory system 40, and the certification system 30 and the factory system 40 need not communicate with each other.

The certification system 30 issues a renewable energy certificate (REC) and conducts the certification described in (i) and (ii) above during hydrogen production and hydrogen extraction. A specific certification method is not a feature of the present embodiment, and any certification method may be adopted. As an example, the certification system 30 certifies by attaching an electronic signature to the carbon intensity or the like. The method of attaching an electronic signature will be described later in detail.

The factory system 40 is a system, such as a server for managing facilities of a factory for producing renewable energy, producing hydrogen, or extracting hydrogen. The factory system 40, for example, produces hydrogen ($CO_2$-free hydrogen in the present embodiment), produces a hydrogen carrier such as methylcyclohexane (MCH), which is a compound of hydrogen with toluene, or produces hydrogen from first and second raw materials (for example, liquefied petroleum gas (LPG) or the like) by an existing process. The factory system 40 extracts hydrogen from a hydrogen carrier by a method suitable for the hydrogen carrier (e.g., dehydrogenation). The hydrogen carrier may be ammonia, a hydrogen storage material, methane, a hydrogen storage material, or the like, or may be transported in the form of liquefied hydrogen or compressed hydrogen.

Therefore, the factory system 40 does not need to be located at one site, and may exist for each hydrogen-producing factory and each hydrogen-extracting factory. The factory system 40 may be called by any name, for example, a plant, a refinery, or a production plant, as long as it is a facility where hydrogen is produced or extracted.

The $CO_2$ emission evaluation device 10 is an information processing system, such as a server managed by a company engaged in at least one of distribution, production, or sale of hydrogen. The $CO_2$ emission evaluation device 10 communicates with the factory system 40 to calculate $CO_2$ emissions and the carbon intensity at the time renewable energy is produced, producing hydrogen, producing a hydrogen carrier, extracting hydrogen, and other processes, and to evaluate whether the hydrogen can be qualified as $CO_2$-free by comparing the carbon intensity with a threshold value. The $CO_2$ emission evaluation device 10 communicates with the certification system 30 to request the certification system 30 to certify the carbon intensity of each process, and to acquire certification information. The process to be certified is, for example, hydrogen production and hydrogen extraction, but is not limited to these processes, and any process that emits $CO_2$, such as renewable energy production and hydrogen carrier production, may be the target of certification.

The $CO_2$ emission evaluation device 10 may be implemented by cloud computing or a single information processing device. Cloud computing refers to a form in which resources on a network are used without being aware of specific hardware resources. The $CO_2$ emission evaluation device 10 may exist on the Internet or on premises.

Although not illustrated in FIG. 2, a terminal device operated by a user may be connected to the network N. Since

the $CO_2$ emission evaluation device 10, the certification system 30, and the factory system 40 can have a function of a Web server, the user can connect the terminal device to the $CO_2$ emission evaluation device 10, the certification system 30, and the factory system 40 so as to display discretionarily chosen information, such as certification information, and transmit information. The terminal device may be, for example, a PC (personal computer), a smartphone, a tablet terminal, or the like used by the user, but any device may be used as long as a Web browser can be executed.

<Hardware Configuration Examples>

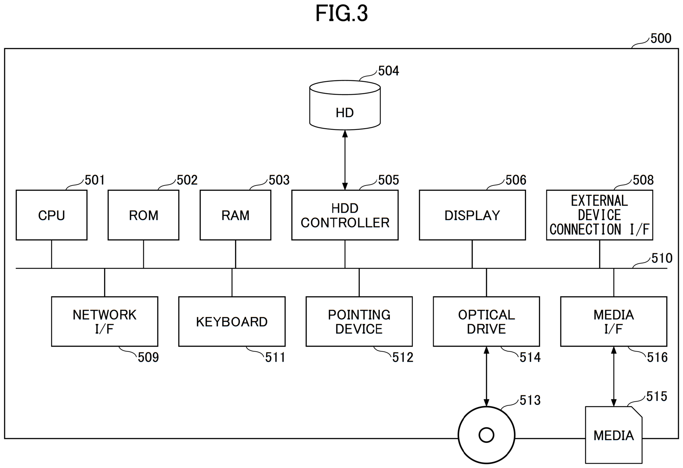

With reference to FIG. 3, the hardware configurations of the $CO_2$ emission evaluation device 10, the certification system 30, and the factory system 40 according to the present embodiment will be described. FIG. 3 is a diagram illustrating an example of hardware configurations of the $CO_2$ emission evaluation device 10, the certification system 30, and the factory system 40 according to the present embodiment. As illustrated in FIG. 3, the $CO_2$ emission evaluation device 10, the certification system 30, and the factory system 40 are constructed by a computer 500, and are provided with a CPU 501, a ROM 502, a RAM 503, an HD (hard disk) 504, an HDD (hard disk drive) controller 505, a display 506, an external device connection I/F (Interface) 508, a network I/F 509, a bus line 510, a keyboard 511, a pointing device 512, a DVD-RW (digital versatile disk rewritable) drive 514, and a media I/F 516.

Of these components, the CPU 501 controls the entire operation of the computer 500. The ROM 502 stores a program, such as an IPL, which is used to drive the CPU 501. The RAM 503 is used as a work area of the CPU 501. The HD 504 stores various data, such as a program. The HDD controller 505 controls reading or writing of various data to the HD 504 under the control of the CPU 501. The display 506 displays various information, such as a cursor, a menu, a window, a character, or an image. The external device connection I/F 508 is an interface for connecting various external devices. An external device in this case is, for example, a USB (universal serial bus) memory or a printer. The network I/F 509 is an interface for performing data communication using the network N. The bus line 510 is an address bus or a data bus for electrically connecting components, such as the CPU 501 illustrated in FIG. 3.

The keyboard 511 is a type of input means provided with a plurality of keys used for inputting characters, numerical values or various instructions. The pointing device 512 is a type of input means for selecting and executing various instructions, selecting a processing target, moving a cursor and the like. The DVD-RW drive 514 controls reading or writing of various data to or from the DVD-RW 513 as an example of a removable recording medium. The DVD-RW drive 514 is not limited to a DVD-RW but may be a DVD-R or the like. The media I/F 516 controls reading or writing (storing) of data to or from a recording medium 515 such as a flash memory.

<Functions>

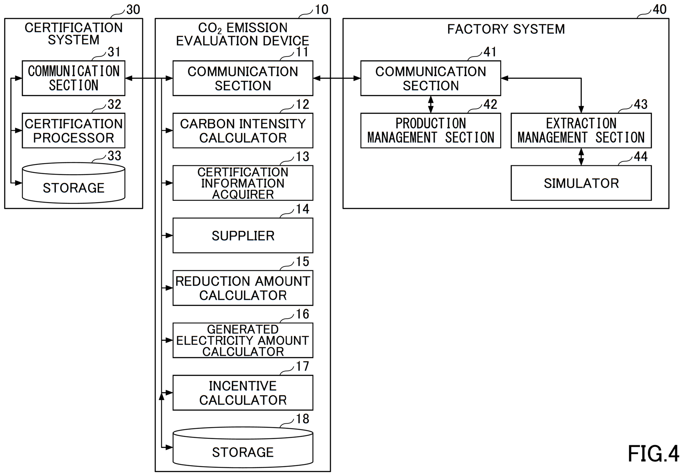

Next, with reference to FIG. 4, the functional configuration of the $CO_2$ emission evaluation system 100 according to the present embodiment will be described. FIG. 4 is a diagram illustrating a functional configuration example of the $CO_2$ emission evaluation system 100.

<<Certification System>>

The certification system 30 includes a communication section 31, a certification processor 32, and a storage 33. Each functional unit of the certification system 30 is a function or means realized by the CPU 501 illustrated in FIG. 3 executing an instruction included in one or more programs installed in the certification system 30.

The communication section 31 transmits and receives various types of information to and from the $CO_2$ emission evaluation device 10. The communication section 31 receives a request from the $CO_2$ emission evaluation device 10 or transmits certification information to the $CO_2$ emission evaluation device 10. The certification information includes, for example, a renewable energy certificate (REC) and an electronic signature.

The certification processor 32 certifies information targeted for certification transmitted by the $CO_2$ emission evaluation device 10. The certification processor 32 conducts certification listed below, for example:

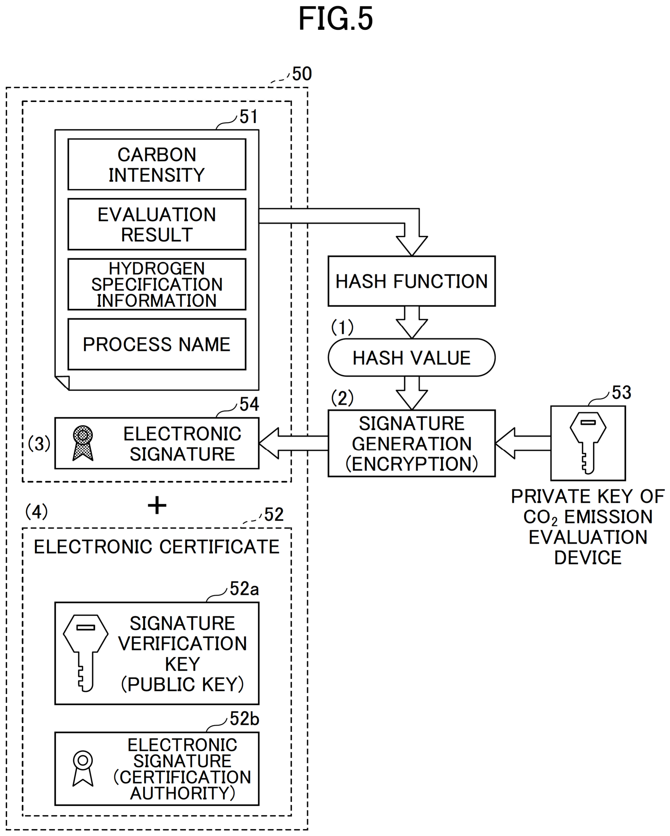

- The certification processor 32 certifies a carbon intensity, an evaluation result of whether hydrogen can be qualified as $CO_2$-free based on the carbon intensity, hydrogen identification information A for identifying hydrogen (production site, production period, produced amount, $CO_2$ emissions, etc.), and a process name (hydrogen production). The criteria of certification may depend on whether or not the requirements of a customer are satisfied.
- The certification processor 32 certifies a carbon intensity, an evaluation result of whether hydrogen can be qualified as $CO_2$-free based on the carbon intensity, hydrogen identification information B for identifying hydrogen (extraction site, extraction period, extracted amount, $CO_2$ emissions, etc.), and a process name (hydrogen extraction). The certification processing will be described in detail with reference to FIG. 5.

The storage 33 stores various types of certification information created by the certification processor 32.

<<Factory System>>

The factory system 40 includes a communication section 41, a production management section 42, an extraction management section 43, and a simulator 44. Each functional unit of the factory system 40 is a function or means realized by the CPU 501 illustrated in FIG. 3 executing instructions included in 1 or more programs installed in the factory system 40.

The communication section 41 transmits and receives various types of information to and from the $CO_2$ emission evaluation device 10. The communication section 41 transmits information regarding a production site, a production period, a produced amount (extracted amount), $CO_2$ emissions, a process name, and the like to the $CO_2$ emission evaluation device 10.

The production management section 42 creates information regarding a production site, a production period, a produced amount, $CO_2$ emissions, a process name, and the like during hydrogen production.

The extraction management section 43 creates information regarding an extraction site, an extraction period, an extracted amount, $CO_2$ emissions, a process name, and the like when hydrogen is extracted.

The simulator 44 is a simulator that estimates an amount of hydrogen extracted based on a raw material composition of a hydrogen carrier or the like and the operating conditions during hydrogen extraction. Therefore, if the raw material composition and the operating conditions are known, the amount of $CO_2$-free hydrogen extracted can be estimated even in the case where $CO_2$-free hydrogen and hydrogen produced by an existing process are blended.

<<$CO_2$ Emission Evaluation Device>>

The $CO_2$ emission evaluation device 10 includes a communication section 11, a carbon intensity calculator 12, a certification information acquirer 13, a provider 14, a reduction amount calculator 15, a generated electricity amount calculator 16, an incentive calculator 17, and a storage 18. Each functional unit of the $CO_2$ emission evaluation device 10 is a function or means realized by the CPU 501 illustrated in FIG. 3 executing instructions included in one or more programs installed in the factory system 40.

The communication section 11 transmits and receives various types of information to and from the certification system 30 and the factory system 40. The communication section 11 transmits information to be certificated to the certification system 30 and receives certification information from the certification system 30. The communication section 11 receives information created by the production management section 42 and the extraction management section 43 from the factory system 40.

When hydrogens are produced from different hydrogen sources and when hydrogens are extracted from different hydrogen carriers, the carbon intensity calculator 12 calculates $CO_2$ emissions of the hydrogens by using $CO_2$ emissions of each of the hydrogens. Details will be described later.

The certification information acquirer 13 requests the certification system 30 to certify the carbon intensity, the evaluation result of whether hydrogen can be qualified as $CO_2$-free based on the carbon intensity, hydrogen identification information A or B for identifying hydrogen, and a process name (hydrogen production), and acquires the certification information. The certification information is stored in the storage 18.

The provider 14 provides certification information to a trading partner that requires certification information, such as a trading partner of a hydrogen carrier containing a produced hydrogen and a trading partner of hydrogen extracted from a hydrogen carrier.

The reduction amount calculator 15 calculates an amount of $CO_2$ emission reduction and a $CO_2$ reduction rate, both of which result from introducing $CO_2$-free hydrogen (in other words, hydrogen characterized by a specific carbon intensity), relative to benchmark $CO_2$ emissions.

The generated electricity amount calculator 16 calculates an amount of electricity generated that can be qualified to be 100% $CO_2$-free based on the introduction of $CO_2$-free hydrogen (in other words, hydrogen characterized by a specific carbon intensity). The generated electricity amount calculator 16 also calculates $CO_2$ emissions generated during electricity generation.

The incentive calculator 17 converts an amount of $CO_2$ reduction that is result from introducing $CO_2$-free hydrogen into a monetary amount. In other words, an incentive is a monetary effect achieved by introducing $CO_2$-free hydrogen.

<Certification System>

A certification method performed by the certification system 30 will be described with reference to FIG. 5. FIG. 5 is a diagram for explaining a certification method using an electronic signature. In FIG. 5, it is assumed that a carbon intensity, an evaluation result of whether hydrogen can be qualified as $CO_2$-free based on the carbon intensity, hydrogen identification information A or B, and a process name (renewable energy production, hydrogen production, hydrogen carrier production, hydrogen extraction, etc.) are the target of certification.

(1) The certification processor 32 calculates a hash value representing the carbon intensity, the evaluation result, the hydrogen identification information A or B, and the process name.

(2) The certification processor 32 encrypts the hash value with a private key 53 that is preset by the $CO_2$ emission evaluation device 10. The encrypted hash value is referred to as an "electronic signature 54".

(3) The electronic signature 54 is attached to electronic data 51 that are the target of certification (carbon intensity, evaluation result, hydrogen identification information A or B, and process name).

(4) The certification processor 32 attaches an electronic certificate 52 of the certification system 30 to the electronic data 51. The electronic certificate 52 includes a public key 52a of the $CO_2$ emission evaluation device 10 and an electronic signature 52b of the certification system 30. The public key 52a is paired with a private key 53, and the information encrypted by the private key 53 can be decrypted only by the paired public key 52a. The electronic signature 52b of the certification system 30 indicates that the electronic certificate 52 has been given by the certification system 30. The electronic data 51, the electronic signature 54, and the electronic certificate 52 are the certification information 50.

The following is the flow (not illustrated) of verifying the electronic data 51 to which the electronic signature 54 and the electronic certificate 52 created as described above are attached. It is assumed that the verification is conducted by a trading partner who purchases hydrogen or the like, but the verification may be conducted by anyone.

(5) The trading partner calculates a hash value representing the carbon intensity, the evaluation result, the hydrogen identification information A or B, and the process name.

(6) The trading partner decrypts the electronic signature 54 attached to the electronic data 51 into the original hash value with the public key 52a.

(7) When the hash value calculated in (5) matches the hash value obtained in (6), a purchaser can determine that the electronic data 51 is not tampered with and that the electronic data 51 is issued by the $CO_2$ emission evaluation device 10.

The above-described certification method is an example, and certification may be conducted by a method other than obtaining certification by a third-party organization or the like.

<Hydrogen Source, Hydrogen Carrier, Hydrogen Extraction>

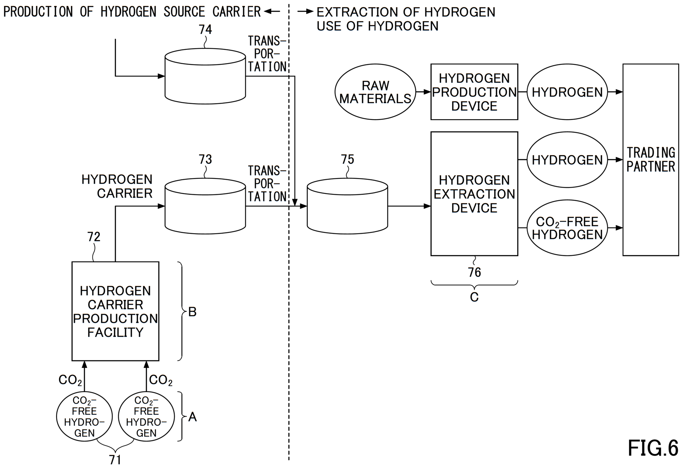

Phases in which certification information is created will be described with reference to FIG. 6. FIG. 6 is a diagram for explaining phases of certification for a hydrogen source, a hydrogen carrier, and extraction of hydrogen. In FIG. 6, two hydrogens 71 are produced. First, the $CO_2$ emission evaluation device 10 can certificate the carbon intensity during hydrogen production (indicated as (A) in FIG. 6). A hydrogen carrier production facility 72 produces a hydrogen carrier from two hydrogen sources (there may be one or more hydrogen sources). The produced hydrogen carrier is stored in a storage facility 73. As an example, the carbon intensity or the like of the hydrogen contained in the storage facility 73 is certificated (indicated as (B) in FIG. 6). In other words, the $CO_2$ emission evaluation device 10 causes the certification system 30 to certify the carbon intensity of the hydrogen carrier (e.g., liquid hydrogen or MCH, etc.) in which hydrogens produced from one or more hydrogen sources are blended.

The hydrogen carrier in the storage facility 73 is transported and stored in the storage facility 75 together with a hydrogen carrier from another storage facility 74. The hydrogen carrier stored in the storage facility 74 may be a $CO_2$-free type or a non-$CO_2$-free type. There may be more than one type of hydrogen carrier. Hydrogen is extracted from the hydrogen carriers in the storage facility 75 by a hydrogen extraction device 76. When hydrogen is extracted, the $CO_2$ emission evaluation device 10 causes the certification system 30 to certify (indicated as (C) in FIG. 6) the carbon intensity of the hydrogen extracted from the storage facility 75. In the case where the hydrogen contained in the hydrogen carrier stored in the storage facility 74 is not $CO_2$-free hydrogen, part of the hydrogen extracted from the storage facility 75 is not $CO_2$-free and part of the hydrogen is $CO_2$-free. In this case, the amount of the $CO_2$-free hydrogen extracted is calculated based on the mixing ratio of the hydrogen carriers in the storage facility 75. In the case where the hydrogen of the hydrogen carrier stored in the storage facility 74 is $CO_2$-free hydrogen, all the hydrogen extracted from the storage facility 75 is $CO_2$-free hydrogen. However, the amount of $CO_2$ reduction is different if the hydrogen sources are different, so it is preferable to estimate the amount of $CO_2$ reduction for each of the storage facility 73 and the storage facility 74.

The $CO_2$ emission evaluation device 10 calculates the amount of $CO_2$ reduction based on the mixing ratio between $CO_2$-free hydrogen and non-$CO_2$-free hydrogen, or based on the fact that all the hydrogen sources are $CO_2$-free hydrogen but the amount of $CO_2$ reduction is different. The $CO_2$ emission evaluation device 10 can report an equal amount of $CO_2$ reduction each destination of the hydrogen extracted, or report that the hydrogen supplied to a specific destination is 100% $CO_2$-free.

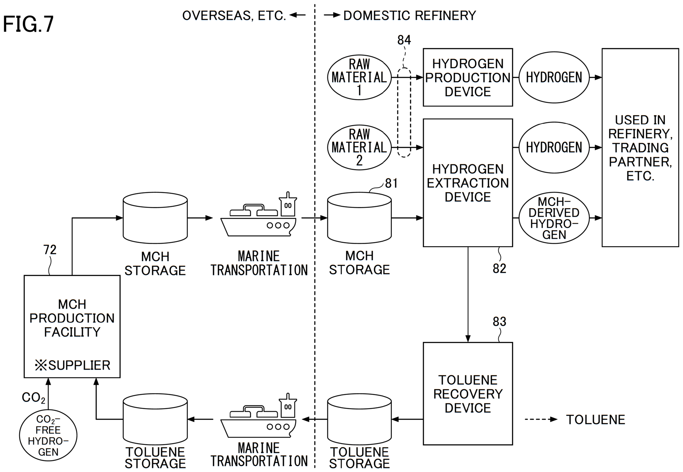

FIG. 7 is a diagram explaining a case where hydrogen extracted from a hydrogen carrier and hydrogen produced from other raw materials are blended. As in FIG. 6, a hydrogen carrier containing $CO_2$-free hydrogen is transported and stored in a storage facility 81. Hydrogen is extracted from the hydrogen carrier in the storage facility 81 by a hydrogen extraction facility 82. After the hydrogen is extracted from the hydrogen carrier, toluene is recovered by the toluene recovery facility 83 and transported to a site where $CO_2$-free hydrogen is produced.

Hydrogen is also produced from various raw materials in a refinery (this process is hereinafter referred to as the " process 84"), and when hydrogen is extracted, the $CO_2$-free hydrogen from the storage facility 81 and the hydrogen extracted by the existing process are blended. The hydrogen produced by the existing process 84 is not $CO_2$-free. In such a case, how much $CO_2$ emissions have been reduced is evaluated based on the ratio of hydrogen certified as $CO_2$-free to the total hydrogen consumption in the refinery.

When a sales company sells the produced hydrogen to its trading partners as $CO_2$-free hydrogen, it can consider that it sells only the $CO_2$-free hydrogen based on the ratio of hydrogen extracted by the existing process and the $CO_2$-free hydrogen, and pass the corresponding certification to the trading partners. When the hydrogen is used in the refinery, the amount of the $CO_2$-free hydrogen traded is subtracted from the total amount of the hydrogen used in the refinery.

<Example of Calculation of Carbon Intensity>

Next, a method of calculating carbon intensity will be described.

(1) Carbon Intensity during Hydrgen Production

The carbon intensity calculator 12 calculates a carbon intensity during hydrogen production by the procedure described below. Herein, a carbon intensity during hydrogen carrier production is calculated on the assumption that $CO_2$ emissions generated during hydrogen production is zero. A method of calculating the carbon intensity of blended hydrogen derived from multiple hydrogen sources with different $CO_2$ emission values will be described. In the case where hydrogen is produced from a single hydrogen source, the carbon intensity is the $CO_2$ emissions of the hydrogen source itself. The $CO_2$ emissions are a relative value per unit amount with respect to a benchmark hydrogen production method.

First hydrogen source: By-product hydrogen, $CO_2$ emissions is 1
Second hydrogen source: Water electrolytic hydrogen, $CO_2$ emissions is 0.1

Assuming that a hydrogen carrier is produced from these hydrogens, the capacity ratio is assumed to be 1:1.

$$\text{Carbon intensity} = 1 \times 0.5 + 0.1 \times 0.5 = 0.55 \ldots (1)$$

If the threshold value for determining whether the produced hydrogen is $CO_2$-free is 0.6, for example, the carbon intensity is less than the threshold value and therefore the hydrogen can be qualified as $CO_2$-free as a whole. By associating the carbon intensity and evaluation results with the produced hydrogen and certifying the carbon intensity and the evaluation results, it is possible to track whether the hydrogen source can be considered $CO_2$-free when trading hydrogen carriers. The value of hydrogen may be determined by agreement between the parties involved in the trading.

(2) Carbon Intensity during Hydrogen Extraction

The carbon intensity calculator 12 calculates a carbon intensity during hydrogen extraction by the following procedure. The method of calculating a carbon intensity during hydrogen extraction from hydrogen carriers and hydrogen carriers having different $CO_2$ emission values during hydrogen extraction will be described. When there is one hydrogen carrier, the carbon intensity is the $CO_2$ emissions generated during hydrogen extraction from the hydrogen carrier.

First hydrogen carrier 1: Hydrogen derived from $CO_2$-free MCH produced in Australia, $CO_2$ emissions is 0.1
Second hydrogen carrier: Hydrogen derived from $CO_2$-free MCH produced in the Middle East, $CO_2$ emissions is 0.5

Assuming that hydrogen is extracted from these hydrogen carriers, the capacity ratio is assumed to be 1:1.

$$\text{Carbon intensity} = 0.1 \times 0.5 + 0.5 \times 0.5 = 0.30 \ldots (2)$$

Assuming that the threshold value for determining whether the hydrogen is $CO_2$-free is 0.6, for example, this carbon intensity is less than the threshold value and the hydrogen can be qualified as $CO_2$-free as a whole. By associating the carbon intensity and the evaluation result with the extracted hydrogen and certifying it, it is possible to track whether the hydrogen is considered $CO_2$-free when it is traded or used. The value of hydrogen may be determined by agreement between the parties involved in the trading.

Alternatively, the total $CO_2$ emissions may be calculated, and the extent of the $CO_2$ emissions reduction may be evaluated based on the cumulative $CO_2$ emissions up to the point of hydrogen use. The value of hydrogen may be determined by agreement between the parties involved in the trading.

<Calculation of $CO_2$ Emissions Reduction>

Next, a method of calculating the $CO_2$ emissions reduction will be described. The $CO_2$ emission evaluation device 10 can include the $CO_2$ emissions reduction as a target of certification.

(1) In the case of self-consumption at a refinery

The reduction amount calculator 15 calculates the $CO_2$ emissions reduction for $CO_2$-free hydrogen for which the carbon intensity has already been calculated as follows. "t-CO2" means the amount of carbon dioxide in tons, and "t-H2" means the amount of hydrogen in tons.

- $CO_2$ emissions of $CO_2$-free hydrogen (t-CO2) = Amount of $CO_2$-free hydrogen (t-H2) $\times$ carbon intensity (t-CO2/t-H2) $\qquad$ (3)

- $CO_2$ reduction (t-CO2) = $CO_2$ emissions before replacement with $CO_2$-free hydrogen (t-CO2) - {$CO_2$ emissions from refinery hydrogen (t-CO2) + $CO_2$ emissions from $CO_2$-free hydrogen (t-CO2)} $\qquad$ (4)

- $CO_2$ reduction (%) = {$CO_2$ emissions from refinery hydrogen (t-CO2) + $CO_2$ emissions from $CO_2$-free hydrogen (t-CO2)}/$CO_2$ emissions before replacement with $CO_2$-free hydrogen (t-CO2) $\qquad$ (5)

If the benchmark $CO_2$ emissions used to calculate the carbon intensity are the $CO_2$ emissions from the production of hydrogen produced by refineries, the $CO_2$ reduction rate can be calculated as follows:

- $CO_2$ reduction (%) = ($CO_2$ emissions before replacement with $CO_2$-free hydrogen -$CO_2$ emissions from $CO_2$-free hydrogen (t-CO2))/$CO_2$ emissions before replacement with $CO_2$-free hydrogen (t-CO2) $\qquad$ (6)

(2) When hydrogen is used for private power generation at refineries, etc.

The reduction calculator 15 calculates the reduction in $CO_2$ emissions when electricity is generated using $CO_2$-free hydrogen for which the carbon intensity has already been calculated.

The calculation method is as follows.

- $CO_2$ emissions generated during electricity generation (t-CO2/MWh) = Amount of $CO_2$-free hydrogen used for electricity generation (t-H2) $\times$ carbon intensity (t-CO2/t-H2)/amount of electricity generated (MWh) $\qquad$ (7)

When electricity is sold, the reduction in $CO_2$ emissions is the difference between the $CO_2$ emissions of the total electricity generated before introduction and the $CO_2$ emissions after introduction. Here, "introduced" means that $CO_2$-free hydrogen has been introduced as fuel for electricity generation.

When electricity is generated using $CO_2$-free hydrogen for which the carbon intensity has already been calculated, the generated electricity amount calculator 16 calculates the amount of electricity generated using $CO_2$-free hydrogen. The $CO_2$ emission evaluation device 10 can include the amount of electricity generated using $CO_2$-free hydrogen as a target of certification.

- 100% $CO_2$-free electricity generation (MWh) = total electricity generation (MWh) $\times$ {$CO_2$ emissions before introduction (t-CO2/MWh) - $CO_2$ emissions after introduction (t-CO2/MWh)}/$CO_2$ emissions before introduction (t-CO2/MWh) $\qquad$ (8)

When oil refineries sell electricity, they declare that it has a carbon intensity of XX percent. Alternatively, they may

indicate "100% $CO_2$-free electricity" and sell only 100% $CO_2$-free electricity generation (MWh) calculated by the equation (8).

<Incentive Calculation Method>

The incentive calculator 17 calculates an incentive ($CO_2$-free incentive) according to the amount of $CO_2$ reduction. The unit of the incentive may be a monetary amount (e.g. yen, dollar, euro, etc.). The incentive calculator 17 can include an incentive as a target of certification.

The method of calculating the $CO_2$-free incentive according to hydrogen produced or supplied is as follows.

- $CO_2$ reduction amount (t-CO2) = (1 - carbon intensity) $\times$ $CO_2$ emissions of benchmark hydrogen (during production or extraction) (t-CO2)

(9)

- $CO_2$-free incentive (yen) = $CO_2$ reduction amount (t-CO2) $\times$ $CO_2$ price (yen/t-CO2)

<Calculation of Amount of Extracted Hydrogen by Simulation>

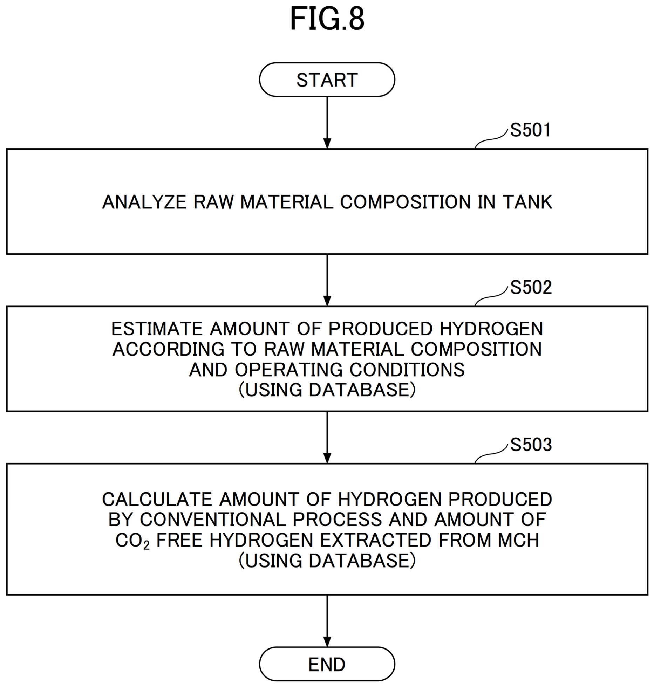

FIG. 8 is a flowchart for explaining the flow in which the simulator 44 estimates an amount of hydrogen extracted. As illustrated in FIG. 7, the estimation of an amount of an extracted hydrogen by simulation is effective when hydrogen extracted from a hydrogen carrier and hydrogen produced from raw materials are blended.

The simulator 44 analyzes the raw material composition in the tank (step S501). Herein, it is assumed that the raw material composition in the tank is known.

The simulator 44 estimates an amount of the produced hydrogen according to the raw material composition and operating conditions (step S502). How much hydrogen is produced in accordance with the raw material composition and operating conditions is estimated from a database or an estimation model generated by machine learning.

The simulator 44 calculates the amount of the hydrogen produced by the existing process and the amount of the $CO_2$-free hydrogen extracted from MCH (step S503). How much hydrogen is produced by the existing process and MCH in accordance with the raw material composition and operating conditions is estimated from a database or an estimation model generated by machine learning.

<Flow of Hydrogen Production, Hydrogen Extraction, and Certification>

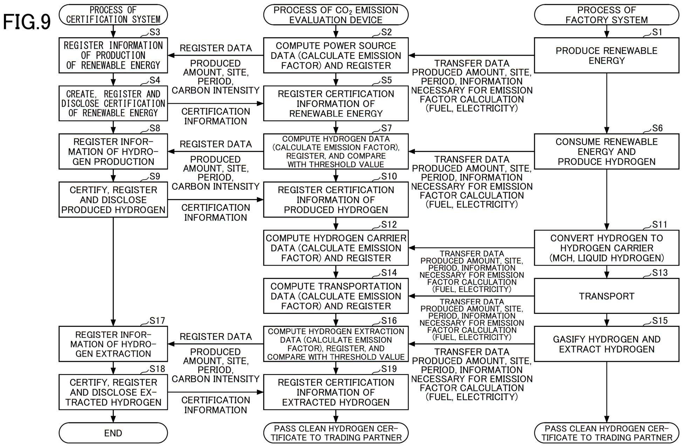

FIG. 9 is a flowchart for explaining the overall flow of the process performed by the certification system 30, the $CO_2$ emission evaluation device 10, and the factory system 40.

Step S1: First, the factory system 40 produces renewable energy (electricity generated by photovoltaic power generation, hydroelectricity, air flow, etc.). The factory system 40 transmits to the $CO_2$ emission evaluation device 10 the production site, production period, produced amount of the renewable energy, and information necessary for emission factor calculation. The information necessary for emission factor calculation is fuel and electricity consumed in the production of renewable energy.

Step S2: The $CO_2$ emission evaluation device 10 calculates an emission factor ($CO_2$ emissions relative to a benchmark) using the information necessary for emission factor calculation (carbon intensity calculation). The emission factor corresponds to the carbon intensity. The $CO_2$ emission evaluation device 10 transmits the production site, production period, produced amount, and carbon intensity of the renewable energy to the certification system 30. If a produced hydrogen is not $CO_2$-free hydrogen (not a green hydrogen), the $CO_2$ emissions upstream of the hydrogen production (e.g., thermal power generation) may be included in the carbon intensity.

Step S3: The certification system 30 registers the production site, production period, produced amount, and carbon intensity of the renewable energy in association with each other.

Step S4: The certification system 30 certifies the production site, production period, produced amount, and carbon intensity of the renewable energy and creates certification information. The certification information is disclosed. The certification system 30 transmits the certification information to the $CO_2$ emission evaluation device 10.

Step S5: The $CO_2$ emission evaluation device 10 registers the certification information related to the production of renewable energy.

Step S6: Next, the factory system 40 produces hydrogen by consuming the renewable energy. The factory system 40 transmits to the $CO_2$ emission evaluation device 10 the production site, production period, produced amount of the hydrogen, and information necessary for emission factor calculation. The information necessary for emission factor calculation is fuel and electricity consumed in the production of hydrogen.

Step S7: The $CO_2$ emission evaluation device 10 calculates an emission factor ($CO_2$ emission relative to a benchmark) by using the information necessary for emission factor calculation. The emission factor corresponds to the carbon intensity. The $CO_2$ emission evaluation device 10 compares the emission factor with a threshold value and evaluates whether or not the produced hydrogen can be considered as $CO_2$-free hydrogen. The $CO_2$ emission evaluation device 10 transmits the hydrogen identification information A, the process name (hydrogen production), the carbon intensity, and the evaluation result to the certification system 30.

Step S8: The certification system 30 registers the hydrogen identification information A, the process name (hydrogen production), the carbon intensity, and the evaluation result.

Step S9: The certification system 30 certifies the hydrogen identification information A, the process name (hydrogen production), the carbon intensity, and the evaluation result, and creates certification information. The certification information is disclosed. This certification information may be called a "clean hydrogen certificate". The certification system 30 transmits the certification information to the $CO_2$ emission evaluation device 10.

Step S10: The $CO_2$ emission evaluation device 10 registers the certification information related to hydrogen production.

Step S11: Next, the factory system 40 converts the produced hydrogen into a hydrogen carrier (e.g., MCH or liquid hydrogen, etc.). The factory system 40 transmits to the $CO_2$ emission evaluation device 10 the production site, production period, produced amount of the hydrogen carrier, and information necessary for emission factor calculation. The information necessary for the emission factor calculation is $CO_2$ emissions generated during the production of fuel and electricity used for the production of the hydrogen carrier, and $CO_2$ emissions generated by the consumption of that fuel and electricity.

Step S12: The carbon intensity calculator of the $CO_2$ emission evaluation device 10 calculates an emission factor ($CO_2$ emissions relative to a benchmark) by using the information necessary for emission factor calculation. The emission factor corresponds to the carbon intensity. The $CO_2$ emission evaluation device 10 registers certification information related to the production of the hydrogen carrier.

Step S13: The hydrogen carrier produced in the factory system 40 is transported to a customer or the like. The factory system 40 transmits to the $CO_2$ emission evaluation device 10 the production site (transportation source and transportation destination), production period, produced amount of the hydrogen carrier, and information necessary for emission factor calculation. The information necessary for emission factor calculation is the $CO_2$ emissions generated during the production of fuel and electricity used for transportation, and the $CO_2$ emissions generated by the consumption of that fuel and electricity.

Step S14: The carbon intensity calculator of the $CO_2$ emission evaluation device 10 calculates an emission factor ($CO_2$ emissions relative to a benchmark) by using the information necessary for emission factor calculation. The emission factor corresponds to the carbon intensity. The $CO_2$ emission evaluation device 10 registers certification information related to transportation of the hydrogen carrier.

Step S15: The factory system 40 extracts hydrogen from a hydrogen carrier. The factory system 40 transmits to the $CO_2$ emission evaluation device 10 the production site, production period, produced amount of the extracted hydrogen, and information necessary for emission factor calculation. The information necessary for emission factor calculation is the $CO_2$ emissions generated during the production of fuel and electricity used for hydrogen extraction, and the $CO_2$ emissions generated by the consumption of that fuel and electricity.

Step S16: The $CO_2$ emission evaluation device 10 calculates an emission factor ($CO_2$ emission relative to a benchmark) using the information necessary for emission factor calculation. The emission factor corresponds to the carbon intensity. The $CO_2$ emission evaluation device 10 also compares the emission factor with a threshold value to evaluate whether the hydrogen can be considered as $CO_2$-free hydrogen. The $CO_2$ emission evaluation device 10 transmits the hydrogen identification information B, the process name (hydrogen extraction), the carbon intensity, and the evaluation result to the certification system 30.

In step S16, the $CO_2$ emission evaluation device 10 may individually request the certification system 30 to certify the $CO_2$ emissions generated during conversion to a hydrogen carrier and the $CO_2$ emissions generated during transportation, or may collectively request the certification system 30 to certify the $CO_2$ emissions generated during conversion to a hydrogen carrier, transportation, and extraction.

Step S17: The certification system 30 registers the hydrogen identification information B, the process name (hydrogen extraction), the carbon intensity, and the evaluation result.

Step S18: The certification system 30 certifies the hydrogen identification information B, the process name (hydrogen extraction), the carbon intensity, and the evaluation result, and creates certification information. The certification information is disclosed. This certification information may be called a "clean hydrogen certificate". The certification system 30 transmits the certification information to the $CO_2$ emission evaluation device 10.

Step S19: The $CO_2$ emission evaluation device 10 registers certification information related to hydrogen extraction.

In FIG. 9, the $CO_2$ emissions generated in each phase of the production of renewable energy, production of hydrogen, conversion to hydrogen carrier, transportation, and extraction are certified. However, the $CO_2$ emissions up to

the previous phases may be calculated in each phase, and the $CO_2$ emissions including the $CO_2$ emissions in the previous phases may be certified.

<Calculation of Carbon Intensity and Use Examples of Certification>

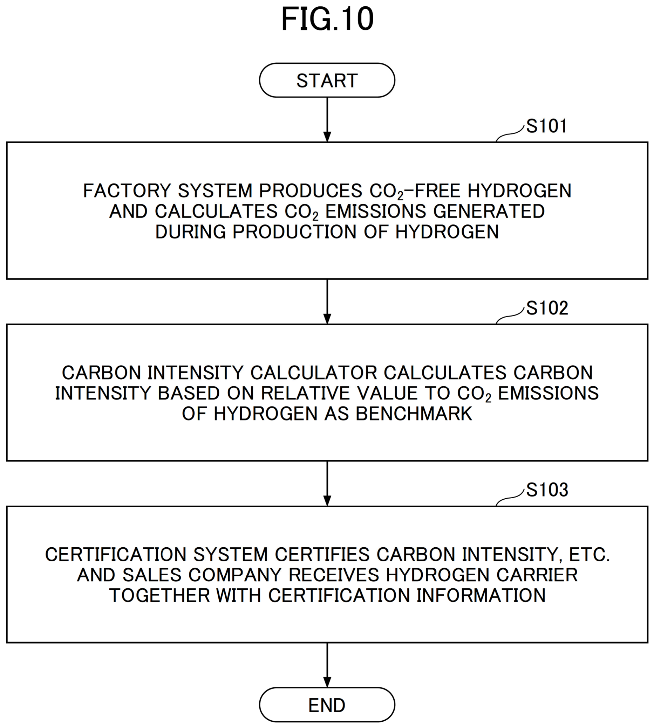

FIG. 10 is a flowchart for explaining the flow of calculation and certification of carbon intensity in a case where one hydrogen source is used.

The factory system 40 produces $CO_2$-free hydrogen and calculates the $CO_2$ emissions generated during the production (step S101). The communication section 41 of the factory system 40 transmits the production site, production period, produced amount, and $CO_2$ emissions of the hydrogen to the $CO_2$ emission evaluation device 10. Herein, for simplicity, it is assumed that the factory system 40 calculates the $CO_2$ emissions.

The carbon intensity calculator 12 of the $CO_2$ emission evaluation device 10 calculates, as a carbon intensity, a relative value of the $CO_2$ emissions generated during the production of the $CO_2$-free hydrogen to the $CO_2$ emissions of hydrogen as a benchmark (step S102). For example, the carbon intensity calculator 12 defines, as a carbon intensity, the ratio of the $CO_2$ emissions calculated in step S101 to the $CO_2$ emissions of hydrogen as a benchmark. The carbon intensity calculator 12 determines the evaluation result by comparing the threshold value with the carbon intensity.

The certification information acquirer 13 of the $CO_2$ emission evaluation device 10 transmits the target of certification (carbon intensity, evaluation result of whether it can be qualified as $CO_2$-free based on the carbon intensity, hydrogen identification information A, and process name) to the certification system 30 via the communication section 11. The certification processor 32 of the certification system 30 certifies the target of certification and creates certification information (step S103). The communication section 31 of the certification system 30 transmits the certification information to the $CO_2$ emission evaluation device 10. The certification information acquirer 13 acquires the certification information. A sales company of hydrogen carriers receives the hydrogen carrier and manages it together with the certification information. In this case, the sales company of hydrogen carriers is a company that manages the $CO_2$ emission evaluation device 10 or a related company.

FIG. 10 illustrates the certification process at the time hydrogen is produced production, and the certification process at the time hydrogen is extracted may follow the same flow.

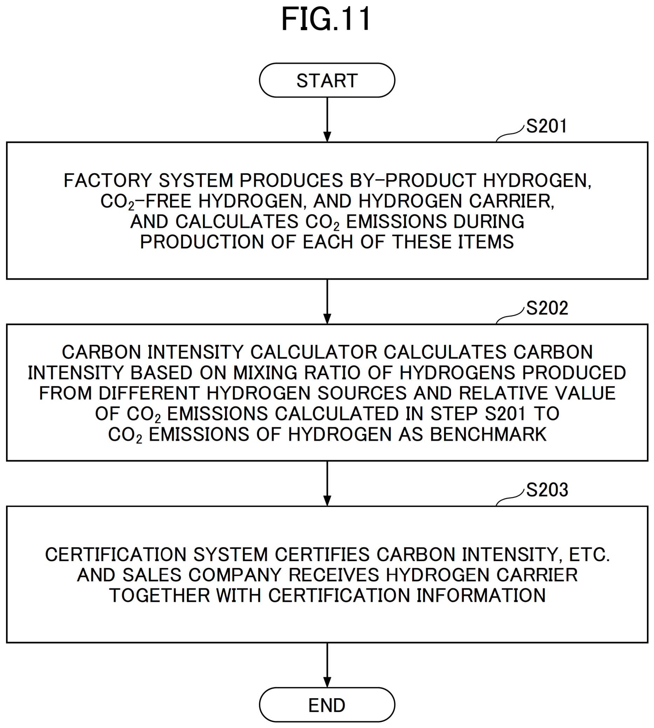

FIG. 11 is a flowchart for explaining the flow of calculation and certification of carbon intensity in the case where there are two hydrogen sources.

The factory system 40 produces by-product hydrogen and $CO_2$-free hydrogen, further produces a hydrogen carrier, and calculates $CO_2$ emissions generated during each production (step S201). The communication section 41 of the factory system 40 transmits the production site, the production period, the produced amount, and the $CO_2$ emissions to the $CO_2$ emission evaluation device 10.

The carbon intensity calculator 12 of the $CO_2$ emission evaluation device 10 calculates the carbon intensity based on the mixing ratio of hydrogens produced from different hydrogen sources and the relative value of the $CO_2$ emissions calculated in step S201 to the $CO_2$ emissions of hydrogen as a benchmark (step S202). The method of calculating the carbon intensity is illustrated in the equation (1) in the above. The carbon intensity calculator 12 determines an evaluation result by comparing the threshold value with the carbon intensity.

The certification information acquirer 13 of the $CO_2$ emission evaluation device 10 transmits a target of certification (carbon intensity, evaluation result of whether hydrogen can be qualified as $CO_2$-free based on carbon intensity, hydrogen identification information A, and process name) to the certification system 30 via the communication section 11. The certification processor 32 of the certification system 30 certifies the target of certification and creates certification information (step S203). The communication section 31 of the certification system 30 transmits the certification information to the $CO_2$ emission evaluation device 10. The certification information acquirer 13 acquires the certification information. A hydrogen sales company receives the hydrogen carrier and manages it together with the certification information.

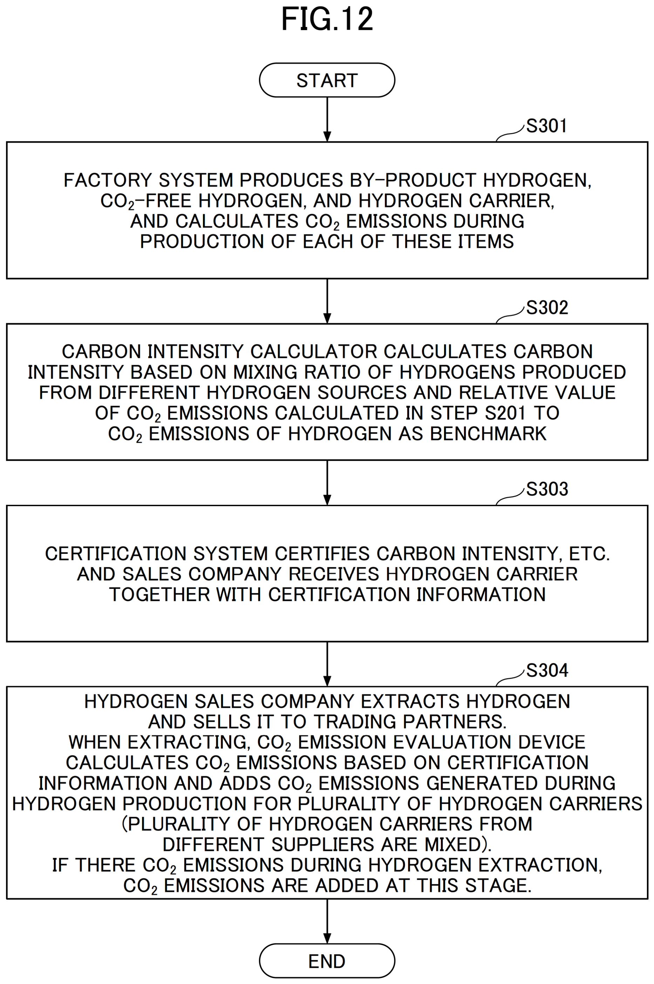

FIG. 12 is a flowchart for explaining the flow of calculation and certification of carbon intensity in the case where there are two hydrogen carriers. In the explanation of FIG. 12, differences from FIG. 10 will be mainly explained. Step S301 through step S303 in FIG. 12 may be the same as step S201 through step S203 in FIG. 11.

A hydrogen sales company extracts hydrogen and sells it to customers. In a situation where hydrogen carriers from a plurality of suppliers are mixed and used (see FIG. 6), when hydrogen is extracted, the reduction calculator 15 calculates the $CO_2$ emissions based on the certification information, and adds up the $CO_2$ emissions generated during hydrogen production for each of the plurality of hydrogen carriers (step S304).

Therefore, the reduction calculator 15 calculates the $CO_2$ emissions by substituting the carbon intensity included in the certification information and the amount of the $CO_2$-free hydrogen extracted from the hydrogen carriers (the same hydrogen carrier containing the $CO_2$-free hydrogen, such as MCH, shall be mixed) into the equation (3). Since there are a plurality of items of certification information when there are a plurality of hydrogen carriers, the reduction calculator 15 calculates the $CO_2$ emissions for each hydrogen carrier. The $CO_2$ emissions of the hydrogen used as a benchmark in the equation (3) are known.

The communication section 11 receives the $CO_2$ emissions when the hydrogen is extracted from the factory system 40, and the reduction calculator 15 adds the $CO_2$ emissions when the hydrogen is extracted to the $CO_2$ emissions calculated in step S404. The certification information acquirer 13 of the $CO_2$ emission evaluation device 10 can certificate the $CO_2$ emissions calculated in step S404 from production to extraction by the certification system 30. The provider 14 can provide the certification information to a trading partner.

In this way, even when hydrogen is extracted from a plurality of hydrogen carriers, the $CO_2$ emissions can be calculated by the certified carbon intensity.

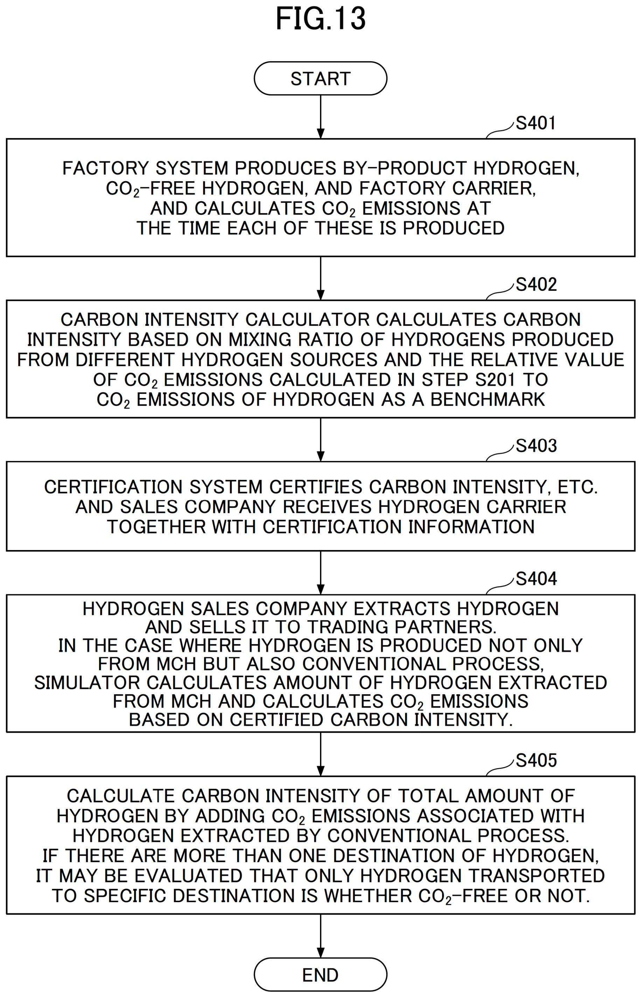

FIG. 13 is a flowchart for explaining the flow of calculation and certification of the carbon intensity in a case where hydrogen is extracted from a hydrogen carrier and hydrogen is produced by an existing process. In the explanation of FIG. 13, differences from FIG. 10 will be mainly explained. Step S401 through step S403 in FIG. 13 may be the same as step S201 through step S203 in FIG. 11.

A hydrogen sales company extracts hydrogen and sells it to customers. When hydrogen is produced not only from MCH but also by the existing process (see FIG. 7), the simulator 44 estimates the amount of the hydrogen extracted from MCH and calculates the $CO_2$ emissions based on the certified carbon intensity (step S404). Since the amount of the hydrogen extracted from MCH cannot be measured in the case where a hydrogen is also produced by the existing process, the simulator 44 therefore estimates the amount of the hydrogen extracted. The amount of the hydrogen obtained by subtracting the amount of hydrogen calculated by the simulator 44 from the total amount of the hydrogen extracted is the amount of hydrogen produced by the existing process.

The reduction amount calculator 15 substitutes the carbon intensity included in the certification information and the amount of $CO_2$-free hydrogen estimated by the simulator 44 into the equation (3), and calculates the $CO_2$ emissions generated during the production of the hydrogen contained in MCH.

Next, the carbon intensity calculator 12 calculates the carbon intensity of the total amount of hydrogen based on the $CO_2$ emissions associated with the hydrogen extracted by the existing process and the $CO_2$ emissions in step S404 (step S405). The communication section 11 acquires the amount of the hydrogen extracted by the existing process and the $CO_2$ emissions from the factory system 40. The communication section 11 also acquires the amount of the hydrogen extracted from MCH (which is calculated by simulation) and the $CO_2$ emissions generated during the extraction of the hydrogen from the factory system 40. This is because the $CO_2$ emissions generated during the extraction of the hydrogen from MCH is added to the $CO_2$ emissions generated during the production of the hydrogen contained in MCH. The carbon intensity calculator 12 can calculate the carbon intensity by the equation (2).

The certification information acquirer 13 of the $CO_2$ emission evaluation device 10 transmits the target of certification (carbon intensity, evaluation result of whether the extracted hydrogen can be qualified as $CO_2$-free based on carbon intensity, hydrogen identification information B, and process name) to the certification system 30 to acquire the certification information at the time the hydrogen is extracted. The provider 14 can provide the certification information to a trading partner.

When there are a plurality of destinations of the hydrogen, it may be evaluated that only the hydrogen transported to a specific destination out of the total amount of the hydrogen is whether $CO_2$-free or not, or it may be evaluated that the ratio of the amount of $CO_2$-free hydrogen to the total amount of the hydrogen is whether $CO_2$-free or not.

<Refinery Operations when $CO_2$-Free Hydrogen is Supplied to Refinery (Extraction from MCH)>

If only the hydrogen in a steady state is $CO_2$-free hydrogen, for example, only 9.5 tons out of 10 tons is used in a steady state, so waste equivalent to 0.5 tons is generated. There is a problem that waste is generated during the transition from a steady state to a supply state.

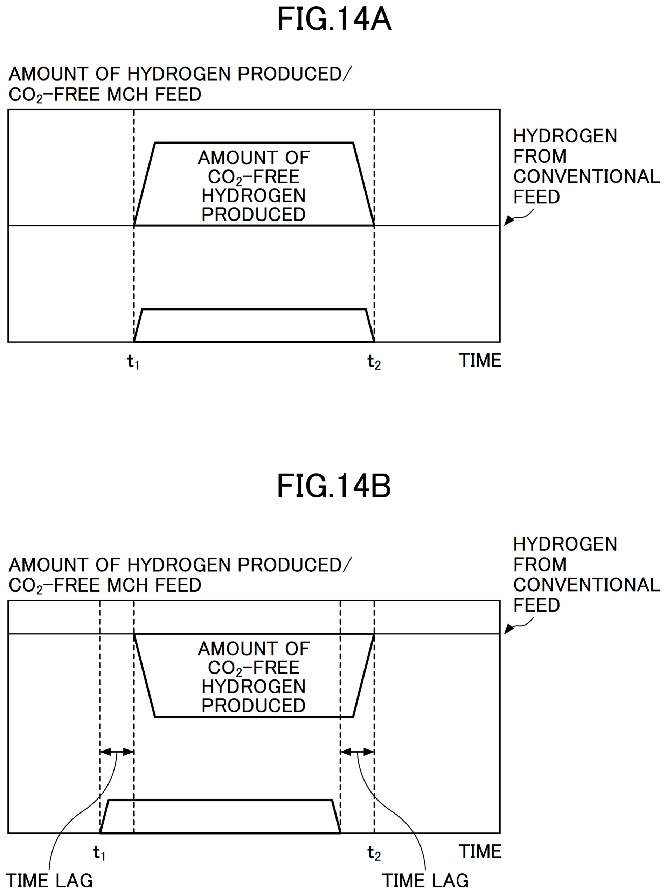

FIGS. 14A and 14B illustrate the relationship between time and the amount of the hydrogen extracted. FIG. 14A illustrates a case where hydrogen extracted from MCH is increased in addition to hydrogen produced from conventional raw materials.

t1: Hydrogen extracted from MCH is stopped after hydrogen production is increased.
t2: $CO_2$-free hydrogen is produced until the amount of hydrogen returns to the normal amount (the amount of $CO_2$-free hydrogen is integrated by a flow meter (supplied to another company)).

FIG. 14B illustrates a case where room for hydrogen extracted from MCH is created by reducing the production rate of hydrogen produced from conventional raw materials.

t1: The time when hydrogen is extracted from MCH is started and the elapsed time lag measured beforehand is waited.
t2: $CO_2$-free hydrogen is produced (supplied to another company) from [the feed start + time lag] to [the feed stop + time lag].

In FIG. 14B, the amount of the $CO_2$-free hydrogen is integrated based on the simulator.

The $CO_2$ emission evaluation device 10 can supply hydrogen corresponding to a carbon intensity calculated by the above-described procedure to another company.

<Main Advantageous Effects>

In the present embodiment, since hydrogen to be traded is associated with a carbon intensity and certified before being traded, even in the case where the hydrogen to be traded is hydrogen produced overseas or in remote places can be fairly traded reflecting the value corresponding to the carbon intensity.

This application claims the priority of Japanese Patent Application No. 2023-106802 filed in the Japan Patent Office on June 29, 2023, and the entire contents of Japanese Patent Application No. 2023-106802 are incorporated herein by reference.

REFERENCE SIGNS LIST

| 10 | $CO_2$ emission evaluation device |
| 30 | Certification system |
| 40 | Factory system |
| 100 | $CO_2$ emission evaluation system |

**Claims**

1. A $CO_2$eq emission evaluation device that communicates with a factory system and a certification system related to hydrogen production via a network, the $CO_2$eq emission evaluation device comprising:

   a communication section configured to receive, from the factory system, $CO_2$ emissions generated during production of hydrogen and hydrogen identification information about the produced hydrogen; and
   a certification information acquirer configured to request the certification system to certify the $CO_2$ emissions associated with the hydrogen identification information and acquire certification information about the $CO_2$ emissions associated with the hydrogen identification information.

2. The $CO_2$eq emission evaluation device according to claim 1,
   wherein

   the communication section is configured to receive, from the factory system, $CO_2$ emissions generated during extraction of hydrogen from a hydrogen carrier and hydrogen identification information about the extracted hydrogen,
   the certification information acquirer is configured to request the certification system to certify the $CO_2$ emissions generated during the extraction of the hydrogen and the hydrogen identification information, and acquire certification information of the $CO_2$ emissions generated during the extraction of the hydrogen and the hydrogen identification information, and
   the $CO_2$eq emission evaluation device further comprises a provider configured to provide the certification information to a trading partner of the extracted hydrogen.

3. The $CO_2$eq emission evaluation device according to claim 2,
   wherein

   the communication section is configured to receive, from a plurality of factory systems, $CO_2$ emissions generated during production of hydrogen and hydrogen identification information about the produced hydrogen, the plurality of factory systems being the factory system,
   the $CO_2$eq emission evaluation device further comprises a carbon intensity calculator configured to calculate a carbon intensity based on the $CO_2$ emissions and an amount of the produced hydrogen included in the hydrogen identification information received from the plurality of factory systems, the carbon intensity being used to calculate the $CO_2$ emissions generated by the plurality of factory systems during the production of the hydrogen,
   the certification information acquirer is configured to request the certification system to certify the carbon intensity and the hydrogen identification information, and acquire the certification information of the carbon intensity and the hydrogen identification information, and

the provider is configured to provide the certification information to a trading partner of a hydrogen carrier containing the produced hydrogen.

4. The CO$_2$eq emission evaluation device according to claim 2 or 3, wherein

the communication section is configured to receive, from the plurality of factory systems, CO$_2$ emissions generated during extraction of hydrogen from a hydrogen carrier and the hydrogen identification information about the extracted hydrogen,

the CO$_2$eq emission evaluation device further comprises a carbon intensity calculator configured to calculate a carbon intensity based on the CO$_2$ emissions and an amount of the hydrogen included in the hydrogen identification information received from the plurality of factory systems, the carbon intensity being used to calculate the CO$_2$ emissions generated by the plurality of factory systems during the extraction of the hydrogen,

the certification information acquirer is configured to request the certification system to certify the carbon intensity and the hydrogen identification information, and acquire the certification information of the carbon intensity and the hydrogen identification information, and

the provider is configured to provide the certification information to a trading partner of the extracted hydrogen.

5. The CO$_2$eq emission evaluation device according to claim 3, wherein

the certification information acquirer is configured to request the certification system to certify, in addition to the carbon intensity and the hydrogen identification information, an evaluation result obtained by comparing the carbon intensity with a threshold value, and acquire the certification information of the carbon intensity, the hydrogen identification information, and the evaluation result, and

the provider is configured to provide the certification information to a trading partner of the extracted hydrogen.

6. The CO$_2$eq emission evaluation device according to claim 4, wherein

the carbon intensity calculator is configured to calculate CO$_2$ emissions generated at a time the extracted hydrogen is produced, based on the carbon intensity included in the certification information and an amount of CO$_2$-free hydrogen extracted from the hydrogen carrier, the amount of the CO$_2$-free hydrogen being obtained from the factory system.

7. The CO$_2$eq emission evaluation device according to claim 3, wherein

in a case where the factory system extracts hydrogen from the hydrogen carrier and produces hydrogen by an existing process, the carbon intensity calculator calculates CO$_2$ emissions generated during production of the extracted hydrogen, based on the carbon intensity included in the certification information and an amount of CO$_2$-free hydrogen extracted from the hydrogen carrier, the amount of the CO$_2$-free hydrogen being calculated by a simulator.

8. The CO$_2$eq emission evaluation device according to claim 7, wherein

the communication section is configured to receive, from the factory system, an amount of the hydrogen extracted from the hydrogen carrier and CO$_2$ emissions generated during the extraction of the hydrogen, and an amount of the hydrogen produced by the existing process and CO$_2$ emissions generated during the production of the hydrogen by the existing process,

the carbon intensity calculator is configured to calculate the carbon intensity related to the CO$_2$ emissions generated during the extraction of the hydrogen, based on the CO$_2$ emissions generated during the extraction of the hydrogen, the amount of hydrogen extracted from the hydrogen carrier, and the amount and the CO$_2$ emissions of hydrogen extracted by the existing process,

the certification information acquirer is configured to request the certification system to certify the carbon intensity and the hydrogen identification information about a total amount of the extracted hydrogen, and acquire the certification information of the carbon intensity and the hydrogen identification information, and

the provider is configured to provide the certification information to a trading partner of the hydrogen extracted.

9. The CO$_2$eq emission evaluation device according to claim 3, further comprising a generated electricity amount calculator configured to

calculate $CO_2$ emissions generated during generation of electricity using the hydrogen extracted from the hydrogen carrier, based on an amount of $CO_2$-free hydrogen used for the generation of the electricity, the certified carbon intensity, and an amount of the electricity generated; and
calculate an amount of electricity generated using the $CO_2$-free hydrogen, based on a total amount of the electricity generated, $CO_2$ emissions before introduction of the $CO_2$-free hydrogen, and $CO_2$ emissions after introduction of the $CO_2$-free hydrogen.

10. The $CO_2$eq emission evaluation device according to claim 3, further comprising an incentive calculator configured to

calculate an amount of $CO_2$ emissions reduction achieved during the production or extraction of the hydrogen, based on the $CO_2$ emissions when electricity is generated using the hydrogen as a benchmark and the certified carbon intensity; and
convert the amount of $CO_2$ emissions reduction into a monetary amount based on a price of $CO_2$.

11. The $CO_2$eq emission evaluation device according to claim 3,
wherein

the communication section is configured to receive information necessary for carbon intensity calculation from the factory system, the information including $CO_2$ emissions generated during production of fuel or electricity used for production of a hydrogen carrier and $CO_2$ emissions generated by the consumption of the fuel and the electricity, and
the carbon intensity calculator is configured to calculate the carbon intensity in the production of the hydrogen carrier using the information necessary for carbon intensity calculation.

12. The $CO_2$eq emission evaluation device according to claim 3,
wherein

the communication section is configured to receive information necessary for carbon intensity calculation from the factory system, the information including $CO_2$ emissions generated during production of fuel or electricity used for transportation of a hydrogen carrier and $CO_2$ emissions generated by consumption of the fuel or the electricity, and
the carbon intensity calculator is configured to calculate the carbon intensity in the transportation of the hydrogen carrier using the information necessary for carbon intensity calculation.

13. A $CO_2$eq emission evaluation system in which a factory system and a certification system related to hydrogen production and a $CO_2$eq emission evaluation device communicate via a network, wherein

the factory system is configured to transmit to the $CO_2$eq emission evaluation device $CO_2$ emissions generated during production of hydrogen and hydrogen identification information about the produced hydrogen,
the $CO_2$eq emission evaluation device comprises:

a communication section configured to receive, from the factory system, the $CO_2$ emissions generated during the production of the hydrogen and hydrogen identification information about the produced hydrogen;
a communication section configured to receive, from the factory system the $CO_2$ emissions generated during the production of the hydrogen and the hydrogen identification information about the produced hydrogen; and
a certification information acquirer configured to request the certification system to certify the $CO_2$ emissions associated with the hydrogen identification information, and acquire certification information of the $CO_2$ emissions associated with the hydrogen identification information.

14. A $CO_2$eq emission evaluation method performed by a $CO_2$eq emission evaluation device that communicates with a factory system and a certification system related to hydrogen production via a network, the $CO_2$eq emission evaluation method comprising:

receiving, from the factory system, $CO_2$ emissions generated during production of hydrogen and hydrogen identification information about the produced hydrogen; and

requesting the certification system to certify the $CO_2$ emissions associated with the hydrogen identification information and acquiring certification information of the $CO_2$ emissions associated with the hydrogen identification information.

PRODUCTION OF HYDROGEN ←    → EXTRACTION OF HYDROGEN
SOURCE CARRIER               USE OF HYDROGEN

HYDROGEN
CARRIER

TRANS-
POR-
TATION

61

62

64

HYDROGEN
CARRIER
STORAGE

HYDROGEN
CARRIER
STORAGE

HYDROGEN
EXTRACTION
FACILITY

CO₂-FREE
HYDROGEN

TRADING
PARTNER

63

HYDROGEN
CARRIER
PRODUCTION
FACILITY

(i)
ISSUE
CERTIFICATION
IN ASSOCIATION
WITH HYDROGEN

(ii)
ISSUE
CERTIFICATION
IN ASSOCIATION
WITH HYDROGEN

CO₂-FREE
HYDROGEN

FIG.1

FIG.2

CLOUD

10

CO$_2$
EMISSION
EVALUATION
DEVICE

100

CERTIFICATION PARTY

30

CERTIFICATION SYSTEM

N

HYDROGEN PRODUCTION SITE/
HYDROGEN EXTRACTION SITE, ETC.

40

FACTORY SYSTEM

# FIG.3

FIG.4

# FIG.5

50

51

| CARBON INTENSITY |
| EVALUATION RESULT |
| HYDROGEN SPECIFICATION INFORMATION |
| PROCESS NAME |

HASH FUNCTION

(1) HASH VALUE

53

(2) SIGNATURE GENERATION (ENCRYPTION)

PRIVATE KEY OF $CO_2$ EMISSION EVALUATION DEVICE

54

(3) ELECTRONIC SIGNATURE

(4) +

52

ELECTRONIC CERTIFICATE

52a

SIGNATURE VERIFICATION KEY (PUBLIC KEY)

52b

ELECTRONIC SIGNATURE (CERTIFICATION AUTHORITY)

PRODUCTION OF HYDROGEN SOURCE CARRIER ← ¦ → EXTRACTION OF HYDROGEN
USE OF HYDROGEN

FIG.6

FIG.7

OVERSEAS, ETC. ← ┆ → DOMESTIC REFINERY

# FIG.8

START

S501

ANALYZE RAW MATERIAL COMPOSITION IN TANK

S502

ESTIMATE AMOUNT OF PRODUCED HYDROGEN
ACCORDING TO RAW MATERIAL COMPOSITION
AND OPERATING CONDITIONS
(USING DATABASE)

S503

CALCULATE AMOUNT OF HYDROGEN PRODUCED
BY CONVENTIONAL PROCESS AND AMOUNT OF
$CO_2$ FREE HYDROGEN EXTRACTED FROM MCH
(USING DATABASE)

END

**FIG.9**

| PROCESS OF CERTIFICATION SYSTEM | | PROCESS OF CO$_2$ EMISSION EVALUATION DEVICE | | PROCESS OF FACTORY SYSTEM |
|---|---|---|---|---|

S3 — REGISTER INFORMATION OF PRODUCTION OF RENEWABLE ENERGY

REGISTER DATA PRODUCED AMOUNT, SITE, PERIOD, CARBON INTENSITY

S2 — COMPUTE POWER SOURCE DATA (CALCULATE EMISSION FACTOR) AND REGISTER

TRANSFER DATA PRODUCED AMOUNT, SITE, PERIOD, INFORMATION NECESSARY FOR EMISSION FACTOR CALCULATION (FUEL, ELECTRICITY)

S1 — PRODUCE RENEWABLE ENERGY

S4 — CREATE, REGISTER AND DISCLOSE CERTIFICATION OF RENEWABLE ENERGY

CERTIFICATION INFORMATION

S5 — REGISTER CERTIFICATION INFORMATION OF RENEWABLE ENERGY

S8 — REGISTER INFORMATION OF HYDROGEN PRODUCTION

REGISTER DATA PRODUCED AMOUNT, SITE, PERIOD, CARBON INTENSITY

S7 — COMPUTE HYDROGEN DATA (CALCULATE EMISSION FACTOR), REGISTER, AND COMPARE WITH THRESHOLD VALUE

TRANSFER DATA PRODUCED AMOUNT, SITE, PERIOD, INFORMATION NECESSARY FOR EMISSION FACTOR CALCULATION (FUEL, ELECTRICITY)

S6 — CONSUME RENEWABLE ENERGY AND PRODUCE HYDROGEN

S9 — CERTIFY, REGISTER AND DISCLOSE PRODUCED HYDROGEN

CERTIFICATION INFORMATION

S10 — REGISTER CERTIFICATION INFORMATION OF PRODUCED HYDROGEN

S12 — COMPUTE HYDROGEN CARRIER DATA (CALCULATE EMISSION FACTOR) AND REGISTER

TRANSFER DATA PRODUCED AMOUNT, SITE, PERIOD, INFORMATION NECESSARY FOR EMISSION FACTOR CALCULATION (FUEL, ELECTRICITY)

S11 — CONVERT HYDROGEN TO HYDROGEN CARRIER (MCH, LIQUID HYDROGEN)

S14 — COMPUTE TRANSPORTATION DATA (CALCULATE EMISSION FACTOR) AND REGISTER

TRANSFER DATA PRODUCED AMOUNT, SITE, PERIOD, INFORMATION NECESSARY FOR EMISSION FACTOR CALCULATION (FUEL, ELECTRICITY)

S13 — TRANSPORT

S17 — REGISTER INFORMATION OF HYDROGEN EXTRACTION

REGISTER DATA PRODUCED AMOUNT, SITE, PERIOD, CARBON INTENSITY

S16 — COMPUTE HYDROGEN EXTRACTION DATA (CALCULATE EMISSION FACTOR), REGISTER, AND COMPARE WITH THRESHOLD VALUE

TRANSFER DATA PRODUCED AMOUNT, SITE, PERIOD, INFORMATION NECESSARY FOR EMISSION FACTOR CALCULATION (FUEL, ELECTRICITY)

S15 — GASIFY HYDROGEN AND EXTRACT HYDROGEN

S18 — CERTIFY, REGISTER AND DISCLOSE EXTRACTED HYDROGEN

CERTIFICATION INFORMATION

S19 — REGISTER CERTIFICATION INFORMATION OF EXTRACTED HYDROGEN

END

PASS CLEAN HYDROGEN CERTIFICATE TO TRADING PARTNER

PASS CLEAN HYDROGEN CERTIFICATE TO TRADING PARTNER

# FIG.10

START

S101

FACTORY SYSTEM PRODUCES $CO_2$-FREE HYDROGEN
AND CALCULATES $CO_2$ EMISSIONS GENERATED
DURING PRODUCTION OF HYDROGEN

S102

CARBON INTENSITY CALCULATOR CALCULATES CARBON
INTENSITY BASED ON RELATIVE VALUE TO $CO_2$ EMISSIONS
OF HYDROGEN AS BENCHMARK

S103

CERTIFICATION SYSTEM CERTIFIES CARBON INTENSITY, ETC.
AND SALES COMPANY RECEIVES HYDROGEN CARRIER
TOGETHER WITH CERTIFICATION INFORMATION

END

# FIG.11

START

S201

FACTORY SYSTEM PRODUCES BY-PRODUCT HYDROGEN, $CO_2$-FREE HYDROGEN, AND HYDROGEN CARRIER, AND CALCULATES $CO_2$ EMISSIONS DURING PRODUCTION OF EACH OF THESE ITEMS

S202

CARBON INTENSITY CALCULATOR CALCULATES CARBON INTENSITY BASED ON MIXING RATIO OF HYDROGENS PRODUCED FROM DIFFERENT HYDROGEN SOURCES AND RELATIVE VALUE OF $CO_2$ EMISSIONS CALCULATED IN STEP S201 TO $CO_2$ EMISSIONS OF HYDROGEN AS BENCHMARK

S203

CERTIFICATION SYSTEM CERTIFIES CARBON INTENSITY, ETC. AND SALES COMPANY RECEIVES HYDROGEN CARRIER TOGETHER WITH CERTIFICATION INFORMATION

END

# FIG.12

START

S301

FACTORY SYSTEM PRODUCES BY-PRODUCT HYDROGEN,
$CO_2$-FREE HYDROGEN, AND HYDROGEN CARRIER,
AND CALCULATES $CO_2$ EMISSIONS DURING
PRODUCTION OF EACH OF THESE ITEMS

S302

CARBON INTENSITY CALCULATOR CALCULATES CARBON
INTENSITY BASED ON MIXING RATIO OF HYDROGENS PRODUCED
FROM DIFFERENT HYDROGEN SOURCES AND RELATIVE VALUE
OF $CO_2$ EMISSIONS CALCULATED IN STEP S201 TO
$CO_2$ EMISSIONS OF HYDROGEN AS BENCHMARK

S303

CERTIFICATION SYSTEM CERTIFIES CARBON INTENSITY, ETC.
AND SALES COMPANY RECEIVES HYDROGEN CARRIER
TOGETHER WITH CERTIFICATION INFORMATION

S304

HYDROGEN SALES COMPANY EXTRACTS HYDROGEN
AND SELLS IT TO TRADING PARTNERS.
WHEN EXTRACTING, $CO_2$ EMISSION EVALUATION DEVICE
CALCULATES $CO_2$ EMISSIONS BASED ON CERTIFICATION
INFORMATION AND ADDS $CO_2$ EMISSIONS GENERATED DURING
HYDROGEN PRODUCTION FOR PLURALITY OF HYDROGEN CARRIERS
(PLURALITY OF HYDROGEN CARRIERS FROM
DIFFERENT SUPPLIERS ARE MIXED).
IF THERE $CO_2$ EMISSIONS DURING HYDROGEN EXTRACTION,
$CO_2$ EMISSIONS ARE ADDED AT THIS STAGE.

END

# FIG.13

```
START
```

S401

FACTORY SYSTEM PRODUCES BY-PRODUCT HYDROGEN,
$CO_2$-FREE HYDROGEN, AND FACTORY CARRIER,
AND CALCULATES $CO_2$ EMISSIONS AT
THE TIME EACH OF THESE IS PRODUCED

S402

CARBON INTENSITY CALCULATOR CALCULATES CARBON
INTENSITY BASED ON MIXING RATIO OF HYDROGENS PRODUCED
FROM DIFFERENT HYDROGEN SOURCES AND THE RELATIVE VALUE
OF $CO_2$ EMISSIONS CALCULATED IN STEP S201 TO
$CO_2$ EMISSIONS OF HYDROGEN AS A BENCHMARK

S403

CERTIFICATION SYSTEM CERTIFIES CARBON INTENSITY, ETC.
AND SALES COMPANY RECEIVES HYDROGEN CARRIER
TOGETHER WITH CERTIFICATION INFORMATION

S404

HYDROGEN SALES COMPANY EXTRACTS HYDROGEN
AND SELLS IT TO TRADING PARTNERS.
IN THE CASE WHERE HYDROGEN IS PRODUCED NOT ONLY
FROM MCH BUT ALSO CONVENTIONAL PROCESS,
SIMULATOR CALCULATES AMOUNT OF HYDROGEN EXTRACTED
FROM MCH AND CALCULATES $CO_2$ EMISSIONS
BASED ON CERTIFIED CARBON INTENSITY.

S405

CALCULATE CARBON INTENSITY OF TOTAL AMOUNT OF
HYDROGEN BY ADDING $CO_2$ EMISSIONS ASSOCIATED WITH
HYDROGEN EXTRACTED BY CONVENTIONAL PROCESS.
IF THERE ARE MORE THAN ONE DESTINATION OF HYDROGEN,
IT MAY BE EVALUATED THAT ONLY HYDROGEN TRANSPORTED
TO SPECIFIC DESTINATION IS WHETHER $CO_2$-FREE OR NOT.

```
END
```

# FIG.14A

AMOUNT OF HYDROGEN PRODUCED/
$CO_2$-FREE MCH FEED

HYDROGEN
FROM
CONVENTIONAL
FEED

AMOUNT OF
$CO_2$-FREE
HYDROGEN
PRODUCED

$t_1$ $t_2$ TIME

# FIG.14B

HYDROGEN
FROM
CONVENTIONAL
FEED

AMOUNT OF HYDROGEN PRODUCED/
$CO_2$-FREE MCH FEED

AMOUNT OF
$CO_2$-FREE
HYDROGEN
PRODUCED

$t_1$ $t_2$ TIME

TIME LAG TIME LAG

## INTERNATIONAL SEARCH REPORT

| International application No. |
| --- |
| **PCT/JP2024/022015** |

| A. | CLASSIFICATION OF SUBJECT MATTER |
| --- | --- |

*G06Q 50/26*(2024.01)i; *G06Q 50/06*(2024.01)i
FI: G06Q50/26; G06Q50/06

According to International Patent Classification (IPC) or to both national classification and IPC

| B. | FIELDS SEARCHED |
| --- | --- |

Minimum documentation searched (classification system followed by classification symbols)

G06Q50/26; G06Q50/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2007-034865 A (HITACHI, LTD.) 08 February 2007 (2007-02-08) entire text, all drawings | 1-14 |
| A | CN 115526533 A (BEIJING GUOQING ZHONGLIAN HYDROGEN ENERGY TECH RESEARCH INSTITUTE CO., LTD.) 27 December 2022 (2022-12-27) entire text, all drawings | 1-14 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 July 2024** | **27 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/022015**

| Patent document cited in search report | | | Publication date (day/month/year) | Patent family member(s) | | | Publication date (day/month/year) |
|---|---|---|---|---|---|---|---|
| JP | 2007-034865 | A | 08 February 2007 | US DE | 2007/0038388 102006034195 | A1 A1 | |
| CN | 115526533 | A | 27 December 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020102024 A

- JP 2023106802 A